# EUROPEAN PATENT SPECIFICATION

(11) **EP 0 385 666 B1**
(45) Date of publication and mention of the grant of the patent: **22.06.1994**
(21) Application number: 90301943.8
(22) Date of filing: 23.02.1990
(51) Int. Cl.: B60C 9/00, B60C 9/20

(54) **Pneumatic radial tire**
Radialer Luftreifen
Bandage pneumatique radial

(30) Priority: 27.02.1989 JP 43205/89
(43) Date of publication of application: 05.09.1990
(73) Proprietor: THE YOKOHAMA RUBBER CO., LTD., Tokyo, 105 (JP)
(72) Inventor: Susumu, Imamiya, Hiratsuka-shi, Kanagawa-ken (JP); Hisao, Katoh, Hiratsuka-shi, Kanagawa-ken (JP); Yukio, Tozawa, Hiratsuka-shi, Kanagawa-ken (JP)
(74) Representative: Bridge-Butler, Alan James

(56) References cited:
- FR-A- 2 464 834
- FR-A- 2 473 080
- US-A- 3 090 189
- US-A- 4 738 096

## Description

This invention relates to pneumatic radial-ply tyres for motor vehicles, more particularly to a steel cord reinforcement therefor.

Advanced pneumatic radial-ply tyres for passenger cars as well as heavy-duty automotive vehicles are provided typically with belt layers made up of rubber coated steel cords. Organic fibre cords such as of aramid have also found wide application for the belts of the radial tyre but have mostly been accompanied with the use of rubber coated steel cords at least for one belt layer to provide increased rigidity.

While steel cords are suitable for use as belt reinforcement material in view of their high rigidity and strength, the cords being steel are susceptible to corrosion attack by water or moisture permeating through an external injury on the tyre which would lead to separation from a coat of rubber surrounding the cords and thus pose a durability problem. To solve this problem, there has been proposed a so-called rubber penetrated steel cord having two filaments in the tyre core and a strand construction of 2x7, 2x6 and so on having increased filament-to-filament spacing in the outer sheath of the tyre. However, such cords literally require so many steel wires that the belt portion of the tyre becomes objectionally thick and that this is economically disadvantageous. Cords with less filaments such as of a 2+2 strand were also proposed and put to use. Even simpler cord structures having a 1x2 strand are also known as disclosed for instance in Japanese Laid-Open Patent Publication Nos. 62-117893 and 62-234921. These cords however are not quite satisfactory in terms of durability as they are also prone to get corroded by water permeation through the belt layers to which the cords are applied.

US Patent 4,738,096 discloses an open type metal cord for tyres, wherein the wire members in a cord unit have the same preform ratio as each other but have a different preform ratio from wire members of other cord units in the tyre, with the difference in the preform ratios being between 0.2 and 0.4 and the ratios themselves lying in the range 1.05 to 1.65.

With the foregoing problems associated with the prior art, research efforts have been made to arrive at the present invention based on the following findings.
(1) Filaments of a 1x2 cord contacted with each other continuously over their entire lengths are liable to relative displacement during use of the tyre which would result in small pores or voids formed in proximity to the contact areas.
(2) The above voids are quite small compared to those formed in closed-twist cords but large enough to receive water particles or water vapour.
(3) The rate of speed of water permeation through the voids in the 1x2 cord is much greater than that of dispersive permeation of water from the tyre surfaces.
(4) It is therefore believed effective to interrupt the continuity of contact between the two filaments.
(5) Since it is impractical to totally eliminate the contact between two filaments longitudinally of the cord, it would be a more practical approach to provide periodically alternate contact and non-contact areas throughout the length of the cord.
(6) This approach can be implemented by varying the preform ratio of the two filaments.

The present invention seeks to provide a pneumatic radial tyre having such a steel cord reinforcement which is immune to corrosive damage which would otherwise result from contact with water permeating through the cuts in the tread of the tyre.

The present invention further seeks to provide a pneumatic radial tyre having rubber coated steel cords of a 1x2 strand construction which are applied inter alia to the belt portion of the tyre and which are devised to preclude permeation of water or moisture directed longitudinally of the cord, thereby contributing to prolonged service life of the tyre.

According to the invention, there is provided a pneumatic radial tyre for motor vehicles which comprises at least one steel cord coated with rubber and applied for reinforcement to a belt layer of the tyre, wherein the steel cord is formed from first and second intertwisted steel filaments, the first steel filament having a preform ratio K₁ and the second steel filament having a preform ratio K₂, the respective preform ratio of each steel filament, being equal to the amplitude H of the steel filament divided by the diameter Do of the steel filament, the preform ratios K₁ and K₂ being related by the formula:$\text{2.05 - K₁ ≦ K₂ ≦ 2.50 - K₁}$
where K₁ is the smaller of the preform ratios K₁ and K₂, the tyre being characterised in that the steel filaments are intertwisted with respective contact regions periodically alternating with respective non-contact regions over the length of the cord.

The above and other objects and features will become apparent from the following description taken with reference to the accompanying drawings.
Figure 1 is a diagrammatic side view of a steel wire filament designed to illustrate a preform ratio "K" for the filament; and
Figure 2 is a diagrammatic side view of a 1x2 cord designed to exaggeratedly illustrate the alternate distribution of contact and non-contact regions of the cord.

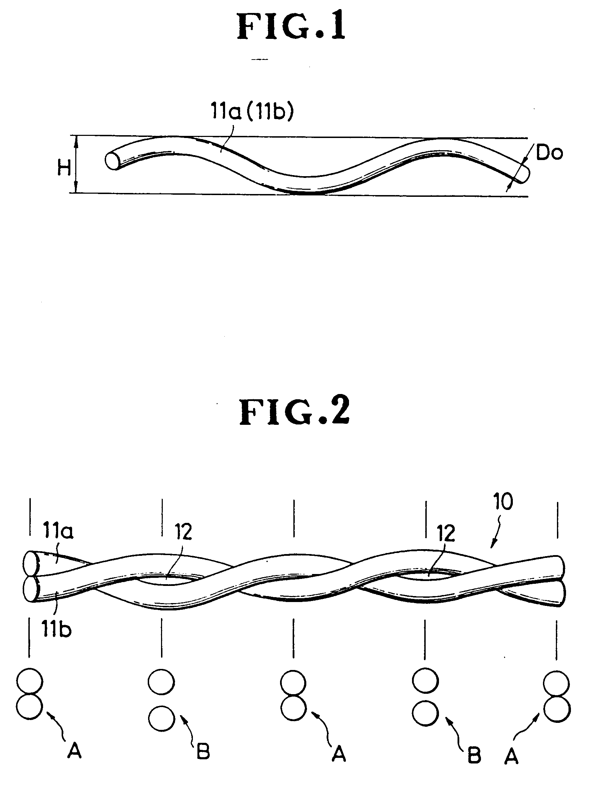

A radial tyre according to the invention is useful for use on passenger cars and heavy duty automotive equipment as well. The tyre incorporates a rubber coated steel cord 10 consisting of two intertwisted filaments 11a and 11b, as shown in Figure 2, for providing reinforcement of inter alia the belt layer or layers of the tyre. In the case where a plurality of belt layers per tyre are present, all of them may be formed of a rubber coated steel cord layer or may include other layer materials such as for example an aramid fibre cord layer.

The steel cord 10 of the invention has a 1x2 strand construction whose filaments 11a and 11b each have a preform ratio "K" in the range of$\text{-K₁ + 2.05 ≦ K₂ ≦ -K₁ + 2.50}$
The term preform ratio "K" used herein is defined by "K" = H/2Do where H is an amplitude of twisted filament 11a, (11b) and Do is a diameter of filament lla, (11b) as illustrated in Figure 1.

The two filaments 11a and 11b may have the same or different preform ratio "K" as long as this parameter remains in the above specified range.

Durability testing of the belt portion of the tyre has been conducted by varying the preform ratio "K". It has now been found that the two filaments 11a and 11b when twisted and formed in accordance with the specified preform ratio "K" present contact regions A periodically alternating with non-contact regions B as shown in Figure 2 and that this strand is conducive to reduction to an absolute minimum of degradation of the cord 10 by water permeation into the belt portion of the tyre. Experiments further revealed that a cord with its filament preform ratio set at K₂ > -K₁ + 2.50 is satisfactory in terms of penetration of the rubbery material through the cord during tyre manufacture and can prevent water permeation from outside the tyre, but the resulting cord ends up with its diameter irregularly distributed along its length and hence is subjected to localised strains developed during the running of the tyre, eventually leading to filament breakage, and further that such tyres when manufactured have considerable dimensional irregularities.

When producing steel wire filaments 11a and 11b having a preform ratio "K₁" and a preform ratio "K₂" respectively, this may be done by adjusting the set positions of the preforming pins so as to control the extent to which the respective filaments are preformed prior to twisting.

The two filaments 11a and 11b are intertwisted with a preform ratio "K" in the range of -K₁ + 2.05 ≦ K₂ ≦ -K₁ + 2.50 whereby they develop mutual contact regions A periodically alternating with non-contact regions B with voids 12 filled up with the rubbery material, as shown in Figure 2. The twist lay length, or the twist pitch of the respective filaments, though not specifically limited, may be preferably in the range of 8 mm to 16 mm.

### Example

Eight different pneumatic radial tyres Nos. 1 to 8 each of size 195/70 R14 having steel corded belt layers with a twist pitch of 14 mm were mounted on a test car and were inflated to an air pressure of 2 kg/cm². The car was run on a paved road for a total travel distance of 60,000 kilometres. Each tyre had been initially provided with a hole in the tread at two different places reaching the belt layers so as to facilitate permeation of water into the tyre on travel. The belt layers were checked for failures with the results listed in the Table in which rubber penetration in the steel cords is represented in percentage by the ratio of the length of filament-to-filament spacing to the length of filaments completely covered with rubber. The length of the cord rusted was measured from the tip end of each hole.

Tyre No. 1 (control) had a 1x2 cord with its filament preform ratio "K" set at 1.00. Rubber penetration was poor at 5%. Cord breakage occurred and rust grew to 20 mm length.

Tyre No. 2 (control) had a "K" value of 0.95 and its test results were substantially the same as Tyre No. 1.

Tyre No. 3 embodying the invention had a 1x2 cord with a "K" value of 1.05 for each of the two filaments. Rubber penetration was satisfactory, no cord breakage, and rust only 5 mm long.

Tyre No. 4 of the invention had a 1x2 cord with a "K" value of 1.00 for one filament and a "K" value of 1.10 for the other. Test results were satisfactory in all respects.

Tyre No. 5 of the invention had a 1x2 cord with a "K" value of 0.90 for one filament and a "K" value of 1.20 for the other.

Tyre No. 6 (control) had a "K" value of 1.30 for each of two filaments. Test results on rubber penetration and rust were satisfactory, but cord breakage occurred.

Tyre No. 7 (control) had a 1x2 cord with a "K" value of 1.20 for one filament and a "K" value of 1.40 for the other. Test results were the same as Tyre No. 6.

Tyre No. 8 (control had a 1x2 cord with a "K" value of 1.00 for one filament and a "K" value of 1.50 for the other. Test results were the same as Tyre Nos. 6 and 7.

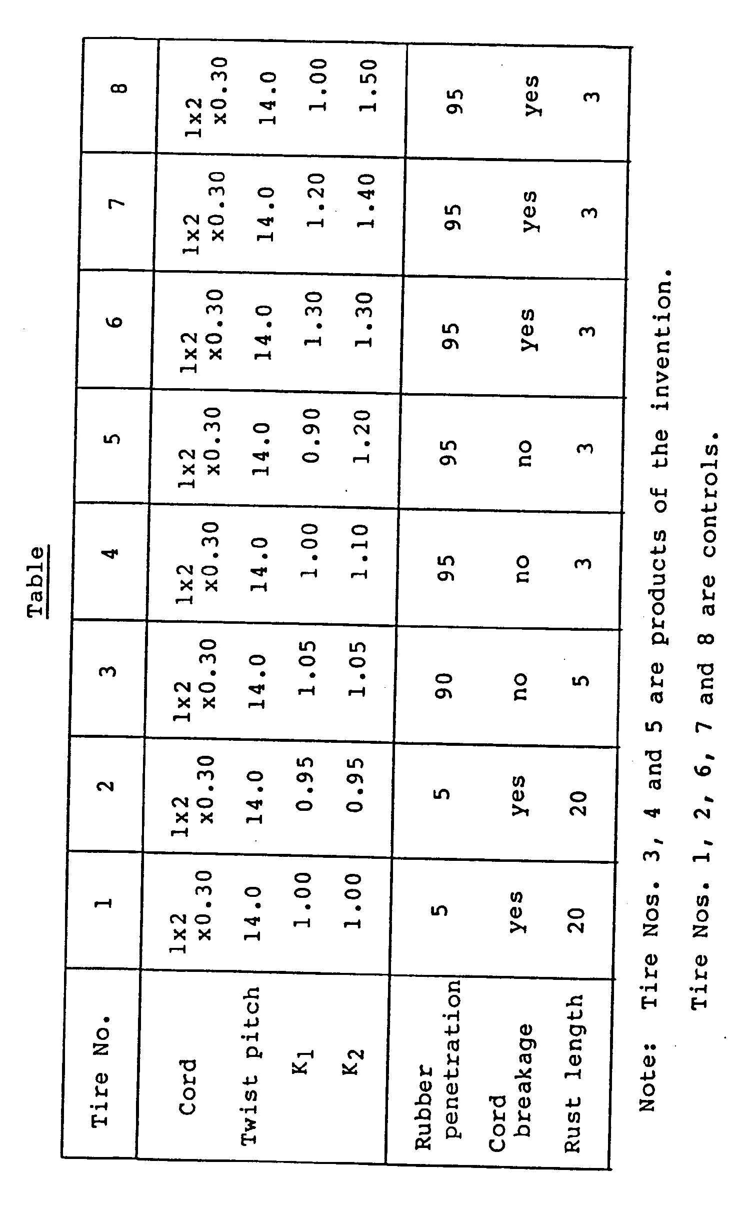

## Claims

1. A pneumatic radial tyre for motor vehicles which comprises at least one steel cord (10) coated with rubber and applied for reinforcement to a belt layer of the tyre, wherein the steel cord (10) is formed from first and second intertwisted steel filaments (11a, 11b), the first steel filament (11a) having a preform ratio K₁ and the second steel filament (11b) having a preform ratio K₂, the respective preform ratio of each steel filament (11a, 11b) being equal to the amplitude H of the steel filament (11a, 11b) divided by the diameter Do of the steel filament (11a, 11b), the preform ratios K₁ and K₂ being related by the formula:$\text{2.05 - K₁ ≦ K₂ ≦ 2.50 - K₁}$ where K₁ is the smaller of the preform ratios K₁ and K₂, and characterised in that the steel filaments (11a, 11b) are intertwisted with respective contact regions (A) periodically alternating with respective non-contact regions (B) over the length of the cord (10).

## Patentansprüche

1. Radialreifen für Kraftfahrzeuge mit zumindest einem Stahlseil (10), das mit Gummi beschichtet ist zur Verstärkung einer Gürtelschicht des Reifens, wobei das Stahlseil (10) aus ersten und zweiten ineinander verflochtenen Stahlfäden (11a, 11b) besteht, wobei der erste Stahlfäden (11a) einen Vorformungsquotienten K₁ und der zweite Stahlfäden (11b) einen Vorformungsquotienten K₂ aufweist und der jeweilige Vorformungsquotient eines jeden Stahlfädens (11a, 11b) der Amplitude H des Stahlfädens (11a, 11b) geteilt durch den Durchmesser Do des Stahlfädens (11a, 11b) entspricht und die Vorformungsquotienten K₁ und K₂ die folgende Formel aufweisen:$\text{2.05 -K₁ ≦ K₂ ≦ 2.50-K₁}$ worin K₁ der kleinere der Vorformungsquotienten K₁ und K₂ ist,
dadurch gekennzeichnet, daß die Stahlfäden (11a, 11b) über die Länge des Seiles (10) abwechselnd mit Kontakt-Bereichen (A) und Nicht-Kontakt-Bereichen (B) ineinander verflochten sind

## Revendications

1. Pneumatique radial pour moteur à véhicule, qui comprend au moins un fil d'acier (10) revêtu de caoutchouc et appliqué, pour son renforcement, à une couche de ceinture du pneumatique, le fil d'acier (10) étant formé d'un premier et d'un second filament d'acier (11a, 11b), torsadés, le premier filament d'acier (11a) possédant un rapport de préformation K1, et le second filament d'acier (11b) possédant un rapport de préformation K2, le rapport de préformation respectif de chaque filament d'acier (11a, 11b) étant égal à l'amplitude H du filament d'acier (11a, 11b) divisé par le diamètre Do du filament d'acier (11a, 11b), les rapports de préformation K1 et K2 étant liés par la formule :$\text{2,05 - K1 < K2 < 2,50 - K1}$ K1 étant le plus faible des rapports de préformation K1 et K2, et caractérisé en ce que les filaments d'acier (11a, 11b) sont torsadés avec des régions de contact respectives (A) alternant périodiquement avec des régions de non-contact respectives (B) sur la longueur du fil (10).
